## Europäisches Patentamt
## European Patent Office
## Office européen des brevets

(19)

(11) Numéro de publication: **0 019 520**
**A1**

(12)

# DEMANDE DE BREVET EUROPEEN

(21) Numéro de dépôt: **80400618.7**

(22) Date de dépôt: **07.05.80**

(51) Int. Cl.³: **H 01 M 2/18**

---

(30) Priorité: **08.05.79 IT 2245879**
**26.06.79 IT 2385179**

(43) Date de publication de la demande:
**26.11.80 Bulletin 80/24**

(84) Etats Contractants Désignés:
**DE FR GB**

(71) Demandeur: **Société dite : FABBRICA ITALIANA
MAGNETI MARELLI S.p.A.
Via Guastalla, 2
Milano(IT)**

(72) Inventeur: **Lemorini, Luciano
Via Mazenta, 19
Magenta(IT)**

(74) Mandataire: **Nony, Michel
29, rue Cambacérès
F-75008 Paris(FR)**

---

(54) **Séparateurs à enveloppe pour accumulateurs électriques et moyens pour la mise en oeuvre de leur fabrication.**

(57) Séparateur, à enveloppe, obtenu par pliage d'une feuille de matière plastique poreuse et par soudage consécutif des bords latéraux, en (8), et dans lequel la surface de l'enveloppe présente des nervures (2), qui (2) sont interrompues au moins au niveau de la zone de pliage (4) de la feuille.

Fig.2

EP 0 019 520 A1

-1-

## Séparateurs à enveloppe pour accumulateurs électriques et moyens pour la mise en oeuvre de leur fabrication

La présente invention concerne des séparateurs à enveloppe pour plaques d'accumulateurs électriques et plus précisément des séparateurs de ce type obtenus par pliage d'une feuille de matière plastique poreuse appropriée et soudage consécutif sur les côtés, dans lesquels la surface intérieure ou extérieure de l'enveloppe présente des nervures à développement longitudinal.

L'invention concerne également des moyens spécialement conçus pour fabriquer ces séparateurs.

Ainsi qu'il est connu, les séparateurs à enveloppe, outre à empêcher le contact entre les plaques de polarité différente, ont la fonction d'envelopper les plaques positives ou négatives de l'accumulateur dans le but de recueillir les boues qui se forment à la suite du décollement de particules de matière active et qui pourraient donner lieu à des courts-circuits.

Ces nervures ont le rôle de maintenir les plaques suffisamment espacées entre elles de manière à assurer, en particulier pour les accumulateurs au plomb, la disponibilité nécessaire d'électrolyte autour des plaques. D'autre part, ces nervures sont réalisées suivant la longueur de la feuille, de manière à définir entre elles des canaux longitudinaux qui favorisent la sortie des gaz.

Toutefois, dans les séparateurs à enveloppe connus les nervures longitudinales sont continues, de sorte que le pliage des feuilles pour obtenir l'enveloppe peut causer des déchirures ou des cassures au niveau de la zone pliée.

-2-

Suivant un système de fabrication bien connu, les séparateurs à enveloppe sont obtenus à partir de feuilles de
matière plastique poreuse résistante à la traction, telle
que les polyoléfines, dotées de nervures continues et en
pliant à froid ces mêmes feuilles, au niveau de la zone
destinée à constituer le fond de l'enveloppe, et en procédant ensuite au soudage des bords latéraux.

Grâce à cette même résistance, les matériaux utilisés ne
sont pas sujets à des ruptures ou à des déchirures au niveau
de la zone de pliage où sont présentes les nervures continues. Il y a toutefois l'inconvénient que ces matériaux sont
coûteux, sans compter que le procédé de fabrication des
séparateurs est assez complexe étant donné que l'on part de
solutions ou d'émulsions de matériaux.

Un autre système connu pour obtenir des séparateurs à enveloppe consiste à partir de feuilles de matière plastique frittée, dotées de nervures continues, et à réchauffer, pendant
l'opération de pliage, la zone intéressée de manière à
éliminer, grâce au ramollissement, la rigidité causée par
les nervures. Ce système permet d'utiliser un matériau
économique mais nécessite toutefois une opération de réchauffage qui rend encore plus compliqué le processus de fabrication des séparateurs.

Le but de la présente invention est de réaliser un séparateur
à enveloppe, doté de nervures à développement longitudinal,
permettant d'utiliser des feuilles en matière plastique
poreuse, même du type économique, et qui se prête à être
pliées pour former le fond de l'enveloppe sans demander
nécessairement des traitements particuliers pour éviter des
cassures au niveau de la zone de pliage.

Selon l'invention, ceci est obtenu avec un séparateur à
enveloppe faisant appel à une feuille de matière plastique
poreuse sur laquelle les nervures longitudinales sont interrompues au moins au niveau de la zone de pliage.

Suivant une forme de réalisation préférée, les nervures se présentent sous forme de séries de nervures côte à côte, lesquelles séries sont séparées entre elles par un espace lisse et se répètent avec un pas constant.

Avantageusement, les nervures interrompues sont obtenues à partir d'une couche de matière plastique en poudre façonnée par un rouleau de formage et ensuite frittée. Le rouleau agit sur la couche de matériau avec une surface présentant une pluralité de cavités dont les caractéristiques correspondent à celles des nervures que l'on désire obtenir sur le séparateur fini.

L'invention sera maintenant décrite, uniquement à titre d'exemple, en regard des dessins annexés, sur lesquels :

la figure 1 montre une partie d'une feuille de matière plastique poreuse, présentant des nervures d'espacement selon l'invention ;

la figure 2 est une vue partielle et en perspective d'un accumulateur électrique utilisant des séparateurs à enveloppe obtenus à partir de la feuille de la figure 1 ;

la figure 3 montre, également en perspective, un rouleau qui permet de façonner les séries de nervures avec le matériau à l'état de poudre ;

la figure 4 montre, d'une manière schématique, le procédé de formage des nervures en utilisant le rouleau de la figure 3.

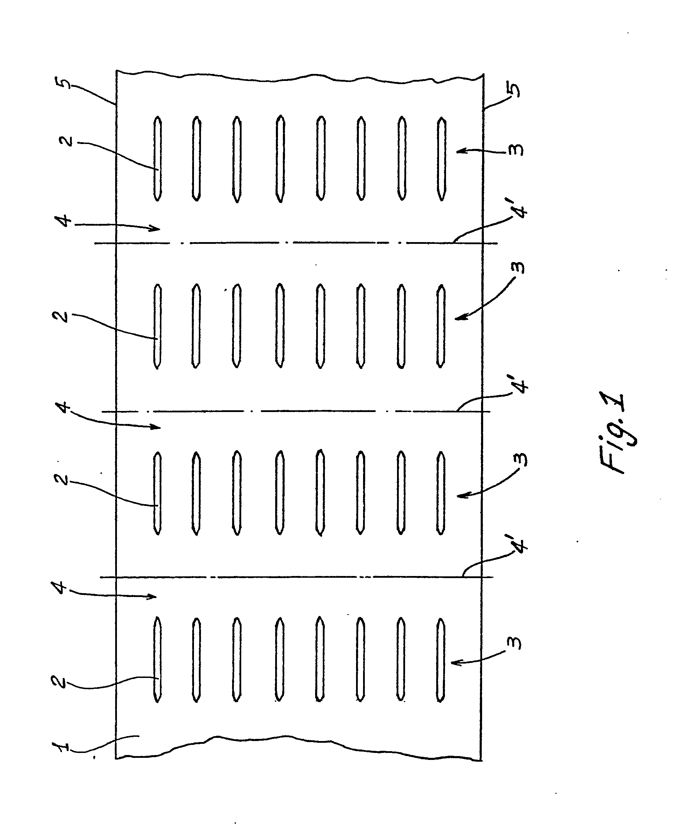

Conformément à la figure 1, la référence 1 indique une portion de feuille ou de ruban de matière plastique poreuse économique, telle que le chlorure de polyvinyle (PVC) fritté, présentant, d'un côté, les nervures d'espacement longitudi-

-4-

nales 2 qui, selon l'invention, sont interrompues.

Ces nervures sont disposées côte à côte et parallèles de manière à former des séries transversales 3 de nervures, qui se répètent avec un pas constant sur toute la longueur de la feuille 1.

Les séries 3 de nervures sont séparées entre elles par des espaces libres ou surfaces plates 4 qui constituent les zones au niveau desquelles la feuille peut être pliée, suivant l'axe pointillé 4', de manière à former le fond du séparateur à enveloppe.

Grâce à l'absence de nervures au niveau des zones 4, l'opération de pliage de la feuille s'effectue sur la partie mince de celle-ci, sans risques de ruptures ou de déchirures du matériau, c'est-à-dire sans que cette partie doive être soumise à des réchauffements ou à d'autres traitements particuliers.

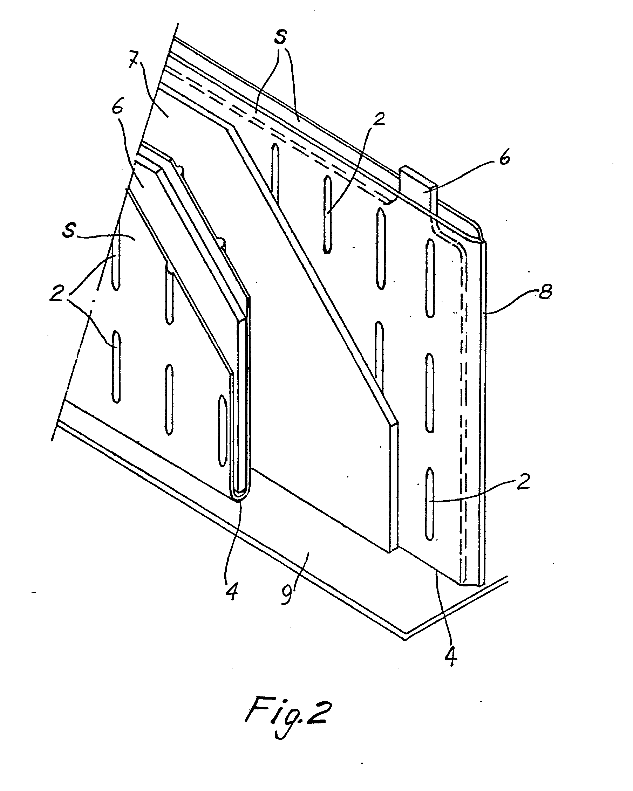

Une fois pliée la feuille 1, les bords latéraux 5 retournés sur eux-mêmes sont fermés pour former le séparateur à enveloppe comme montré sur la figure 2.

Cette figure montre partiellement un accumulateur électrique dans lequel sont utilisés des séparateurs à enveloppe S pliés au niveau de la zone 4 dépourvue de nervures 2.

Chaque séparateur contient une plaque négative 6, et par conséquent les nervures 2 se trouvent à l'extérieur de l'enveloppe de manière à réaliser l'espacement voulu par rapport à la plaque positive 7.

Il est toutefois évident que l'enveloppe pourra aussi bien contenir la plaque positive, auquel cas les nervures seront à l'intérieur.

-5-

La fermeture du séparateur à enveloppe s'effectue par soudure, soudure qui sur la figure est représentée uniquement sur un côté et qui est indiquée par 8.

Comme on peut le voir sur la figure, chaque séparateur à enveloppe s'appuie avec son fond ou partie repliée 4 sur le fond 9 du bac de l'accumulateur.

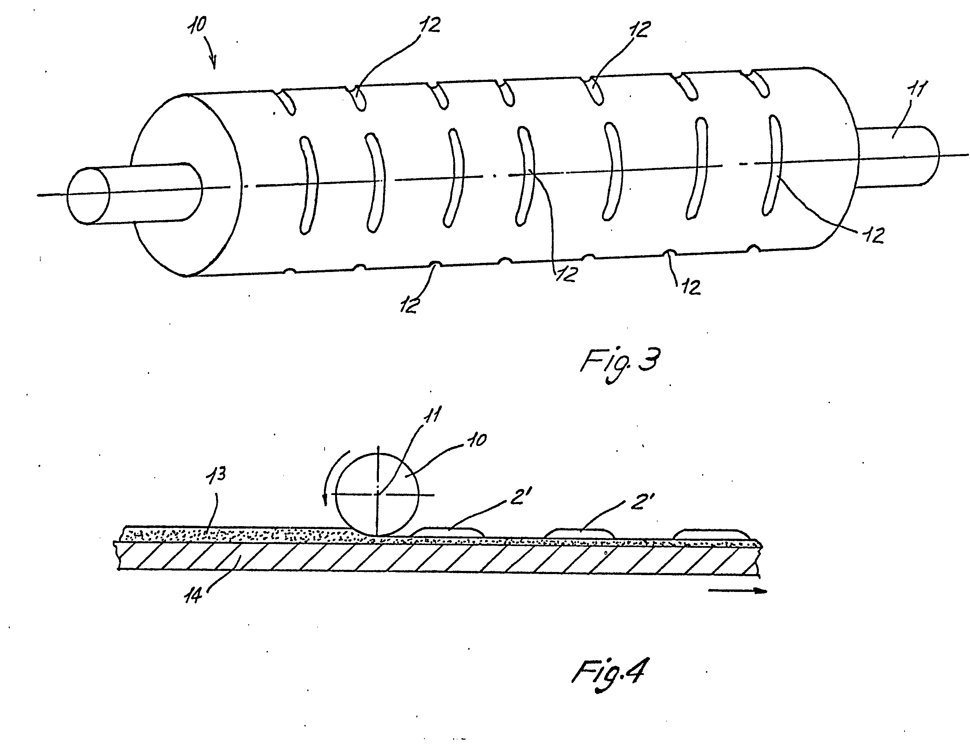

Le rouleau 10 de la figure 3 permet d'obtenir les nervures d'espacement lorsque le matériau est à l'état de poudre. Ce rouleau tourne autour d'un axe fixe 11 et présente sur sa surface cylindrique une pluralité de cavités 12 dont les caractéristiques (nombre, dimensions et disposition) correspondent à celle des nervures que l'on désire obtenir sur le séparateur fini.

Ainsi, si les nervures que l'on veut obtenir sont celles représentées sur la figure 1, les cavités 12 sont réalisées en arc de cercle et se présentent sous forme de séries de cavités disposées côte à côte et équidistantes qui se répètent périodiquement, comme les séries 3 de nervures de la figure 1.

Comme représenté sur la figure 4, pendant la formation des nervures à l'état de poudre le rouleau 10 est mis en rotation et agit avec une certaine pression sur la couche de poudre 13 de matériau pendant que cette même couche avance entraînée par le support 14.

La couche de poudre comprimée avec les nervures 2' est ensuite passée dans un four pour le frittage, et on obtient ainsi à la sortie une feuille comme celle représentée sur la figure 1.

Comme matériau économique utilisé on a cité à titre d'exemple le chlorure de polyvinyle (PVC) fritté, mais il va de soi que l'invention s'applique à tout autre matériau présen-

-6-

tant des caractéristiques appropriées de porosité, de résistance à l'action agressive de l'électrolyte, etc... .

Au lieu de partir d'un matériau à l'état de poudre comme décrit, le séparateur à enveloppe pourra également être obtenu à partir d'une feuille lisse frittée que l'on fait passer entre deux rouleaux convenablement profilés de manière à réaliser, par emboutissage, les séries de nervures interrompues.

Le séparateur à enveloppe pourra également être obtenu à partir d'une masse pâteuse de matière plastique à l'état de solution ou d'émulsion, façonnée entre deux rouleaux dotés de profils appropriés suivant que l'on désire obtenir des nervures interrompues pleines ou creuses.

Que ce soit dans le cas d'une feuille lisse frittée ou dans celui d'une masse pâteuse, le matériau, pour être façonné, doit naturellement être porté à l'état de ramollissement, ce qui peut être fait en réchauffant les rouleaux.

Bien que les dessins et la description fassent référence à des nervures linéaires et perpendiculaires au fond de l'enveloppe, il va de soi que, suivant les exigences pratiques, la configuration des nervures pourra être différente de celle qui est représentée. Par exemple, les nervures interrompues pourront présenter une légère inclinaison par rapport à l'axe longitudinal.

Enfin, bien que l'on ait fait référence à des opérations de pliage et de soudage latéral pour obtenir le séparateur à enveloppe, abstraction faite de la plaque, en réalité, dans un processus de production continue, ces opérations sont effectuées après avoir positionné la plaque positive ou négative.

De cette manière on a l'avantage d'obtenir un ensemble plaque-enveloppe-isolant sous forme d'unité indépendante.

Il va de soi que l'invention n'est pas limitée à la forme de réalisation qui vient d'être décrite et illustrée, mais qu'elle est au contraire susceptible de modifications et variantes rentrant toutes dans le cadre des revendications qui vont suivre.

Revendications de brevet

1. Séparateur à enveloppe pour plaques d'accumulateurs électriques, obtenu par pliage d'une feuille de matière plastique poreuse appropriée et par soudage consécutif des bords latéraux, et dans lequel la surface intérieure ou extérieure de l'enveloppe présente des nervures d'espacement à développement longitudinal, caractérisé par le fait que les nervures sont interrompues au moins au niveau de la zone de pliage de la feuille.

2. Séparateur à enveloppe selon la revendication 1, caractérisé par le fait que les nervures se présentent sous forme de séries de nervures disposées côte à côte, lesquelles séries sont séparées l'une de l'autre par un espace lisse et se répètent avec un pas constant.

3. Séparateur à enveloppe selon l'une quelconque des revendications 1 et 2, caractérisé par le fait que les nervures sont obtenues à partir d'une couche continue de matière plastique en poudre façonnée par un rouleau de formage et ensuite frittée.

4. Séparateur à enveloppe selon les revendications 1 et 2, caractérisé par le fait que les nervures sont obtenues à partir d'une feuille lisse continue de matériau fritté que l'on fait passer entre des rouleaux dotés de profils appropriés, de manière à réaliser par emboutissage lesdites séries de nervures interrompues, le formage des nervures étant effectué à l'état de ramollissement de la feuille.

5. Séparateur à enveloppe selon les revendications 1 et 2, caractérisé par le fait que les nervures sont obtenues à partir d'une masse pâteuse de matière plastique façonnée par des rouleaux dotés de profils appropriés, de manière à obtenir les séries de nervures interrompues, pleines ou creuses, le formage des nervures étant effectué à l'état de

0019520

-9-

ramollissement de la masse pâteuse.

6. Séparateur à enveloppe selon l'une quelconque des revendications précédentes, caractérisé par le fait que les opérations de pliage et de soudage latéral de la feuille de matériau pourvue de nervures interrompues sont effectuées après positionnement de la plaque.

7. Moyens pour la mise en oeuvre de la fabrication du séparateur tel que défini dans la revendication 3, caractérisés par le fait qu'ils comprennent un rouleau de formage qui possède un axe fixe autour duquel il peut tourner, et qui possède une surface cylindrique, laquelle présente une pluralité de cavités interrompues ayant des dimensions et une disposition qui permettent de former la série de nervures interrompues que l'on désire obtenir sur le séparateur fini, ladite surface cylindrique étant destinée à être appliquée, avec une légère pression, sur la couche de poudre.

Fig. 1

0019520

Fig.2

10    12              12              12

11

12    12    12    12

*Fig. 3*

13    11    10    2'    2'    14

*Fig. 4*

0019520

Office européen
des brevets

**RAPPORT DE RECHERCHE EUROPEENNE**

Numéro de la demande
EP 80 40 0618

| Catégorie | Citation du document avec indication, en cas de besoin, des parties pertinentes | Revendica-tion concernée | CLASSEMENT DE LA DEMANDE (Int. Cl. ³) |
|---|---|---|---|
| **DOCUMENTS CONSIDERES COMME PERTINENTS** | | | |
| | GB - A - 1 415 958 (YUASA BATTERY COMP.) <br><br> * Figure 8, page 2, ligne 125 - page 3, ligne 3; revendications 1,5 * <br> -- | 1 | H 01 M 2/18 |
| | GB - A - 1 105 487 (CHLORIDE BATTE-RIES) <br><br> * Revendication 9, page 2, lignes 63-70 et lignes 103-105 * <br> -- | 3,5,6 | |
| | FR - A - 2 394 179 (GENERAL MOTORS CORP.) <br><br> * Page 9, lignes 24-36; figure 2 * <br> -- | 4 | **DOMAINES TECHNIQUES RECHERCHES (Int. Cl. ³)** <br><br> H 01 M 2/18 <br> 2/14 <br> 4/76 |
| | DE - A - 592 140 (ACCUMULATOREN FABRIK A.G.) <br><br> * Revendications 1,4; figures 1 et 2 * <br> -- | | |
| A | FR - A - 1 312 625 (F. STRAUSS) <br><br> * Résumé points 5° et 6°; figures 2 et 4 * <br> -- | | |
| A | US - A - 2 157 629 (S.W. ROLPH) <br><br> * Figure 3, page 2, colonne de droite, lignes 25-31; page 3, colonne de gauche, lignes 24-30 * <br> -- | | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| A | US - A - 3 892 620 (W.C. HEUSSY) <br><br> * Figures 1,9,10; colonne 3, lignes 13-21; revendication 1 * <br> ---- | | |
| | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 27.08.1980 | D'HONDT |

OEB Form 1503.1   06.78